# EUROPÄISCHE PATENTSCHRIFT

(11) **EP 0 888 918 B1**
(45) Veröffentlichungstag und Bekanntmachung des Hinweises auf die Patenterteilung: **12.02.2003**
(21) Anmeldenummer: 98111707.0
(22) Anmeldetag: 25.06.1998
(51) Int. Cl.: B60J 7/057

(54) **Betätigungsanordnung für den Deckel eines Kraftfahrzeugschiebedachs**
Actioning device for a vehicle sliding roof panel
Système de actionnement pour panneau de toit coulissant de véhicule

(30) Priorität: 30.06.1997 DE 19727738
(43) Veröffentlichungstag der Anmeldung: 07.01.1999
(73) Patentinhaber: ArvinMeritor GmbH, 63128 Dietzenbach (DE)
(72) Erfinder: Stallfort, Klaus, 63477 Maintal (DE); Hatass, Rainer, 63584 Gründau (DE); Federmann, Dieter, 63450 Hanau (DE)
(74) Vertreter: Oppermann, Ewald, Dipl.-Ing.

(56) Entgegenhaltungen:
- DE-A- 3 817 391
- DE-C- 3 607 724
- DE-U- 8 625 566

## Beschreibung

Die Erfindung bezieht sich auf eine Betätigungsanordnung für den Deckel eines Kraftfahrzeugschiebedachs entsprechend dem Oberbegriff des Patentanspruchs 1.

Die Bezeichnung "Kraftfahrzeugschiebedach" bzw. "Schiebedach" soll für die Zwecke der vorliegenden Erfindung nicht nur solche Konstruktionen einschließen, bei denen der Deckel nach Absenken seiner Hinterkante zur Freigabe der Dachöffnung unter die hintere feste Dachfläche verschiebbar ist, sondern auch sogenannte "Schiebehebedächer", bei denen der Deckel außerdem ausgehend von seiner Schließstellung um eine in der Nähe seiner Vorderkante vorgesehene Schwenkachse zur Ausstellung über die feste Dachfläche verschwenkt werden kann.

Bei einer bekannten Betätigungsanordnung der eingangs genannten Art (DE 34 04 124 A1) ist eine Verbindungsplatte an der Oberseite des dort als Kabelhalter bezeichneten Mitnehmers beispielsweise durch Annieten befestigt. An einem Ende der Verbindungsplatte ist ein Lager ausgebildet, das einen Stift aufnimmt, welcher in einen Schlitz einer Kulisse einer Hochstellvorrichtung eingreift. Wenn der Stift entlang dem Schlitz verstellt wird, erfolgt eine Verstellbewegung der Kulisse je nach Richtung der Verstellbewegung nach oben oder unten, wodurch der Deckel im Bereich seiner Hinterkante hochgestellt oder abgesenkt wird.

Weiterhin ist eine gattungsgemäße Kabelführung für Kraftfahrzeugschiebedächer bekannt (DE 32 21 487 A1), bei welcher eine dort als hinterer Führungsschuh bezeichnete Verschiebevorrichtung an ihr befestigte Gleitvorsprünge aufweist, mit denen die Verschiebevorrichtung verschiebbar in Kabelführungskanälen einer Führungsschiene geführt ist. Ein Antriebskabel ist auf jeder Deckelseite an einen Gleitvorsprung kraftschlüssig angeschlossen, so daß der Gleitvorsprung auch die Funktion eines Mitnehmers für die Übertragung von Kabelverstellbewegungen auf die Verschiebevorrichtung hat. Die Verschiebevorrichtung bzw. der hintere Führungsschuh weist eine über seine Länge durchgehende schlitzförmige Vertiefung auf, welche oben von zwei gabelartig angeordneten Seitenwänden begrenzt ist. Durch die Seitenwände ist ein Ausstellbolzen hindurchgeführt, der den Kulissenschlitz einer in die schlitzförmige Vertiefung eingreifenden Kulissenplatte durchsetzt. Die Kulissenplatte ist an Befestigungslaschen einer Schiebedeckelversteifung höhenverstellbar befestigt.

Diesen bekannten Konstruktionen gemeinsam ist die Verschiebung der beiden Verschiebevorrichtungen, d.h. der hinteren Führungsschuhe, mit Hilfe von Antriebskabeln, welche von einem Zahnritzel angetrieben werden. Das Zahnritzel ist an einer Antriebswelle drehfest angebracht und steht im Zahneingriff mit den gewindeartigen Drahtwicklungen der Kabel nach Art eines Zahnstangenantriebs. Die Drehbetätigung des Zahnritzels erfolgt über eine Antriebsvorrichtung mittels einer Handkurbel oder einem elektromotorischen Antrieb. Weitere Gemeinsamkeiten bestehen darin, daß die Antriebskabel an die Verschiebevorrichtungen (hinteren Führungsschuhe) durch die Mitnehmer starr angebunden sind, und daß deren Kraft- und Bewegungsübertragung über Stifte oder Ausstellbolzen in den Führungsbahnen der Kulissen erfolgt. Die Kulissen wiederum sind starr mit dem Deckel verbunden, so daß sich insgesamt eine direkte Berührungskette der Antriebsglieder vom Zahnritzel bis zum Deckel ergibt. Nur ein gleichmäßiger und spielfreier Zahneingriff zwischen dem Ritzel und der gewindeartigen Drahtwicklung der Antriebskabel kann ein gleichmäßiges und ruckfreies Verschieben und/oder Ausstellen des Deckels bewirken.

Ein spielfreier Zahneingriff ist jedoch infolge von Fertigungstoleranzen sowohl bei der Ritzelherstellung als auch beim Aufbrinqen der gewindeartigen Drahtwicklung auf die Kabelseele praktisch ausgeschlossen. Vor allem beim Einsatz von elektromotorischen Antrieben mit schnelldrehendem Ritzel zum Erzielen von raschen Deckelbewegungen können ungenaue Zahneingriffe aber zu ruckartigen Kabellängsbewegungen führen, welche unmittelbar auf den Deckel übertragen werden und dort, vor allem beim Ausstellen der Deckelhinterkante, zu Deckelvibrationen führen. Ebenso können Vibrationen des Motorankers direkt auf den Deckel übertragen werden. Durch die Antriebskabel können auch Motorgeräusche direkt auf den Deckel übertragen werden und sich dort infolge der großen Deckelresonanzfläche besonders nachteilig auswirken. Außerdem haben Untersuchungen ergeben, daß bei nicht aktiviertem Antrieb eine Situation eintreten kann, bei welcher bei ungenauer Eingriffsgeometrie zwischen Zahnritzel und Antriebskabel ein Drahtwicklungsabschnitt zwischen zwei Ritzelzähnen ohne direkte Anlage an mindestens einen der Zähne zu liegen kommt. Damit sind bei stillstehendem Ritzel vom Deckel ausgehende und von den Mitnehmern auf die Antriebskabel übertragene geringfügige Kabelverschiebungen im Rücktrieb möglich. Diese können zum Beispiel bei ausgestelltem Deckel durch auf den Deckel auftretende Luftströmung während der Fahrt oder bei unebenem Straßenbelag Deckelschwingungen mit entsprechenden Geräuschen hervorrufen.

Der Erfindung liegt die Aufgabe zugrunde, eine Betätigungsanordnung bereitzustellen, mit welcher eine störungsfreie und geräuscharme Kraft- und Bewegungsübertragung vom Kabelantrieb bis zum Deckel erreicht wird.

Diese Aufgabe wird durch die im kennzeichnenden Teil des Patentanspruches 1 angegebenen Merkmale der Betätigungsanordnung gelöst. Weiterbildungen der Betätigungsanordnung gehen aus den Unteransprüchen hervor und sind nachfolgend ebenfalls beschrieben.

Dadurch, daß der Mitnehmer, der einerseits im Formschluß starr an das Antriebskabel angreift, andererseits aber erfindungsgemäß mit der Verschiebevorrichtung über ein elastisches Dämpfungselement verbunden ist, ist die direkte starre Berührungskette der auf den Deckel insgesamt einwirkenden Antriebsglieder unterbrochen, wodurch ohne Beeinträchtigung der Betätigungsfunktionen eine überraschend wirksame Geräuschminderung erzielt wird, die auch bei dem vorstehend geschilderten vom Deckel ausgehenden "Rücktrieb" eintritt.

Die Ausbildung des Dämpfungselements kann auf verschiedene Weise erfolgen, wenn lediglich berücksichtigt wird, daß dieses trotz guter Dämpfungseigenschaften die erforderlichen Stellkräfte zu übertragen und auch den im Fahrbetrieb auftretenden Kräften standzuhalten hat.

Vorzugsweise ist das Dämpfungselement gemäß Anspruch 2 aus einem gummielastischen Werkstoff geformt, in welchen der Mitnehmer teilweise und unlösbar eingebettet ist. Durch Auswahl und Formgebung eines geeigneten gummielastischen Werkstoffs können die Dämpfungseigenschaften des Dämpfungselements in weiten Grenzen zweckdienlich festgelegt werden.

Eine vorteilhafte Ausführungsform geht aus Anspruch 3 hervor. Hierbei ist eine flache Platte am Mitnehmer vorgesehen, die ein großflächiges Einvulkanisieren in ein als Gummiblock ausgebildetes Dämpfungselement und damit eine sichere Befestigung des Mitnehmers am Dämpfungselement ermöglicht. Durch die Blockform des Dämpfungselements ist eine gute Übertragung der auftretenden Kräfte sichergestellt. Die Verwendung von Gummi als dämpfungsintensives Material in Verbindung mit einem Mitnehmer aus Metall erlaubt die Ausnutzung der aufgrund dieser Werkstoffpaarung möglichen sehr sicheren Befestigungsart des Auf- oder Einvulkanisierens, ohne daß Metallflächen von Mitnehmer und Führungsschuh unmittelbar aufeinander zu liegen kommen.

Wenn entsprechend Anspruch 4 in der flachen Platte des Mitnehmers noch Ausnehmungen vorgesehen sind, durch welche Gummimaterial beim Einbettungsvorgang hindurchtritt, erfolgt eine besonders gute Verankerung des Mitnehmers am bzw. im Dämpfungselement.

Die Befestigung des Dämpfungselements an der Verschiebeeinrichtung kann auf unterschiedliche Weise erfolgen. Beispielsweise kann das Dämpfungselement teilweise im Formschluß an eine den Formschluß ermöglichende Struktur der verschiebeeinrichtung durch Klemmen od.dgl. festgelegt sein. Vorzugsweise ist die Anordnung jedoch entsprechend Anspruch 5 getroffen. Hierbei ist an das Dämpfungselement, wiederum unter Ausnutzung der bei der Werkstoffpaarung Gummi/Metall möglichen Vulkanisiertechnik, eine Befestigungsplatte aus Metall aufvulkanisiert, die an ihrer Außenseite mit Anschluß- bzw. Befestigungsmitteln versehen ist, welche mit zugeordneten Aufnahmemitteln an der Verschiebeeinrichtung zusammenwirken.

Weitere Einzelheiten der Erfindung werden nachfolgend unter Bezugnahme auf die ein Ausführungsbeispiel darstellenden Zeichnungen näher erläutert. Darin zeigt:
- Fig. 1: die abgebrochene Draufsicht auf den Führungsrahmen eines Schiebedachs,
- Fig. 2: die Schnittansicht entlang der Linie II-II in Fig. 1,
- Fig. 3: die Schnittansicht entlang der Linie III-III in Fig. 1 und
- Fig. 4: die Schnittansicht entlang der Linie IV-IV in Fig. 3.

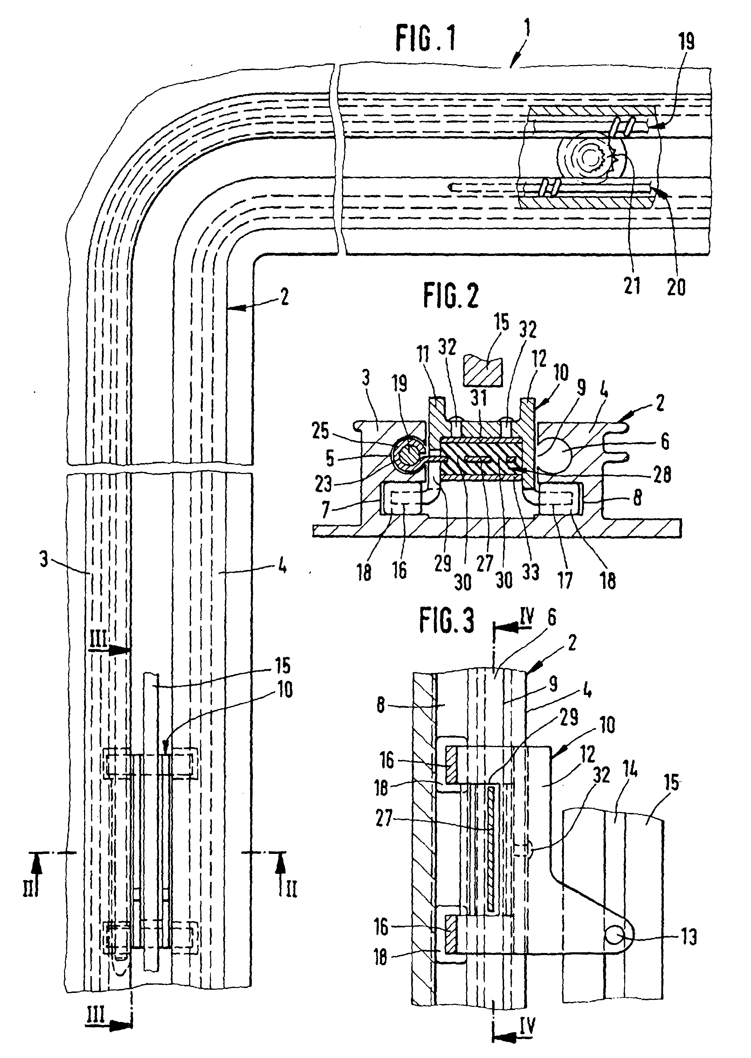

In den Zeichnungen, von denen die Fig. 2 bis 4 gegenüber Fig. 1 in größeren Maßstäben dargestellt sind, wurden zur Vereinfachung der Darstellungen einige zum Verständnis der Erfindung nicht erforderlichen und von der Erfindung in ihrer Ausgestaltung nicht beeinflußten Elemente weggelassen. So sind beispielsweise die feste Dachfläche des Kraftfahrzeugdachs und der Deckel des Schiebedachs nicht eingezeichnet. In Fig. 1 sind nur Teilbereiche des vorderen Rahmenteils und des linken Rahmenteils dargestellt. Das rechte Rahmenteil und die mit ihm eingreifenden Elemente sind etwa spiegelbildlich gestaltet.

Der im gezeichneten Beispiel einteilige Führungsrahmen 1 besitzt wenigstens in seinen für die Erfindung wichtigen seitlichen Bereichen eine Führungsschiene 2, die zwei parallel und mit Abstand nebeneinander verlaufende nach oben gerichtete Profilrippen 3 und 4 aufweist. Die zueinander gekehrten Flächen der Profilrippen 3 und 4 sind parallel zueinander angeordnet. In den Profilrippen 3 und 4 befinden sich oben gegenüberliegend Kabelführungskanäle 5 und 6 und unten gegenüberliegend Führungsnuten 7 und 8. Die Kabelführungskanäle besitzen übereinstimmende kreisförmige Querschnitte, die zur Führungsschienenmitte hin durch Schlitze 9 geöffent sind.

An den Führungsschienen sind zur Führung des Deckels paarweise angeordnete vordere und hintere Führungsschuhe verschiebbar geführt, von denen in den Zeichnungen nur der links hinten befindliche hintere Führungsschuh 10 dargestellt ist. Dieser Führungsschuh, der zusammen mit dem nicht dargestellten rechten hinteren Führungsschuh die Verschiebevorrichtung für den Deckel bildet, besitzt im wesentlichen einen H-förmigen Querschnitt und weist nach oben gerichtete zueinander parallele Seitenwände 11 und 12 auf, welche im wesentlichen zur Aufnahme eines Ausstellbolzens 13 (Fig. 3) dienen. Der Ausstellbolzen 13 befindet sich im Eingriff mit dem Führungsschlitz 14 einer Kulissenplatte 15, die auf nicht dargestellte Weise mit dem ebenfalls nicht dargestellten Deckel des Schiebedachs verbunden ist. An den nach unten gerichteten Seitenwänden 11 und 12 befinden sich am unteren Ende nach außen abgebogene Fortsätze 16 und 17, an welchen Gleitstücke 18 angebracht sind. An jeder Seite des Führungsschuhs 10 befinden sich zwei Gleitstücke 18, die in den Führungsnuten 7 und 8 geführt sind.

In den Kabelführungskanälen 5 und 6 sind zwei flexible Antriebskabel 19 und 20 druck- und zugsteif verschiebbar geführt. Die Antriebskabel 19 und 20 werden gegenläufig von einem im vorderen Rahmenteil des Führungsrahmens 1 drehbar gelagerten Antriebsritzel 21 angetrieben. Jeweils eines der Antriebskabel ist mit einem der hinteren Führungsschuhe verbunden, der gezeichnete linke hintere Führungsschuh 10 ist mit dem Antriebskabel 19 auf noch zu beschreibende Weise verbunden. Die Antriebskabel 19 und 20 haben eine Seele und eine darauf fest aufgebrachte gewindeartige bzw. schraubenlinienförmige Drahtwicklung 22. Mit dieser stehen die Zähne des Antriebsritzels 21 in einer zahnstangenähnlichen Antriebsverbindung.

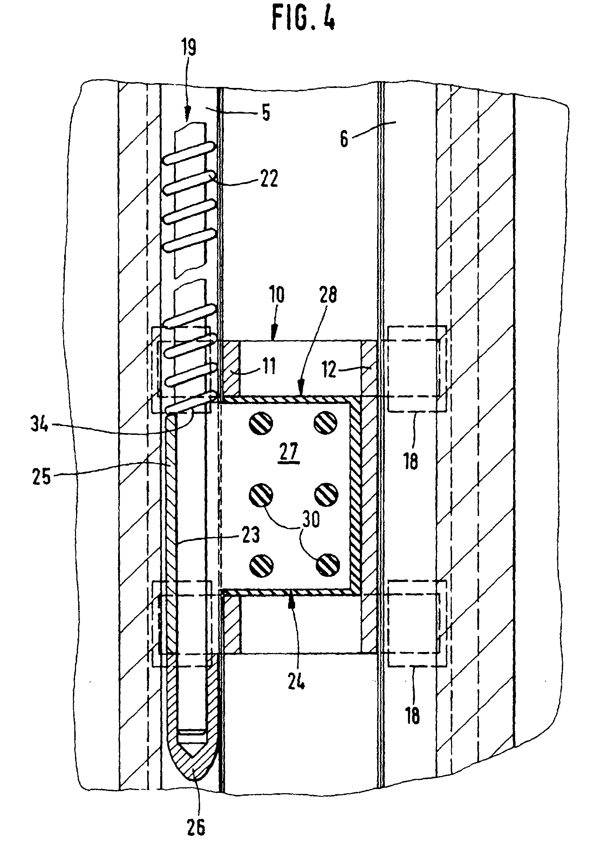

An den Enden beider Antriebskabel 19 und 20, von denen hier nur unter Bezugnahme auf die Spiegelbildlichkeit das Antriebskabel 19 beschrieben wird, ist die Drahtwicklung 22 von der Kabelseele entfernt, wie insbesondere Fig. 4 veranschaulicht. Die so freigelegte Kabelseele ist durch eine Öffnung 23 eines allgemein mit der Bezugszahl 24 versehenen Mitnehmers hindurchgesteckt. Die Öffnung 23 ist durch eine hohlzylindrische Ausformung 25 des aus Metallblech hergestellten Mitnehmers 24 gebildet. Die hohlzylindrische Ausformung 25 umgibt die Seele des Antriebskabels 19 im Formschluß. Die axiale Festlegung des Mitnehmers 24 am Antriebskabel 19 erfolgt einerseits durch eine Plombe 26, die auf das über die hohlzylindrische Ausformung 25 vorstehende Ende der Kabelseele aufgesteckt und durch Verstemmen darauf festgesetzt ist, und andererseits durch die Anlage der nicht entfernten Drahtwicklung 22 an die andere Seite der hohlzylindrischen Ausformung 25. Eine Verdrehsicherung zwischen Antriebskabel 19 und Mitnehmer 24 wird durch eine Abschrägung 34 an der Stirnseite der hohlzylindrischen Ausformung 25, an welcher die letzte Wicklung der Drahtwicklung 22 anliegt, erreicht.

Der von der hohlzylindrischen Ausformung 25 des Mitnehmers 24 abstehende Schenkel ist als flache Platte 27 ausgebildet. Diese flache Platte 27 tritt durch den Schlitz 9 des Kabelführungskanals 5 hindurch und ist mit dem hinteren Führungsschuh 10 auf noch zu beschreibende Weise unter Zwischenlage eines elastischen Dämpfungselements, das allgemein mit der Bezugszahl 28 bezeichnet ist, verbunden.

Weiterhin tritt die flache Platte 27 des Mitnehmers 24 durch eine fensterartige Ausnehmung 29 im unteren Bereich der Seitenwand 11 des Führungsschuhs 10 hindurch. Die fensterartige Ausnehmung 29 liegt mit ihren Wandungen an keiner Seite der flachen Platte 27 an, so daß der Mitnehmer 24 nicht in metallischer Berührung mit dem Führungsschuh 10 steht. Die der fensterartiqen Ausnehmung 29 gegenüberliegende Wand der Seitenwand 12 ist durchgehend ausgebildet, wobei der rechte nicht gezeigte Führungsschuh spiegelbildlich ausgeführt ist.

Das elastische Dämpfungselement 28 ist aus einem gummielastischen Werkstoff geeigneter Härte geformt. Die Befestigung der in das Dämpfungselement 28 eingebetteten flachen Platte 27 erfolgt durch Vulkanisieren. Zur Verbesserung der Verankerung der flachen Platte ist diese mit durchgehenden Ausnehmungen 30 versehen, welche von dem Gummimaterial des Dämpfungselements 28 durchsetzt sind.

Im gezeigten Ausführungsbeispiel ist das Dämpfungselement 28 blockförmig ausgebildet und besitzt etwa die Gestalt eines Quaders. Dem blockförmig aus Gummimaterial geformten Dämpfungselement 28 ist eine Befestigungsplatte 31 aus Metall aufvulkanisiert, die an ihrer Außenseite Befestigungsbolzen 32 trägt. Unten kann auf das blockförmige Dämpfungselement eine metallische Abschlußplatte 33 anvulkanisiert sein, so daß das Dämpfungselement insgesamt sandwichartig aufgebaut ist, mit einer gummielastischen dicken Mittelschicht, in welche die flache Platte 27 des Mitnehmers 24 eingebettet ist, und einer oberen sowie einer unteren metallischen Platte.

Das blockförmige Dämpfungselement 28 ist so bemessen, daß es von der Unterseite des Führungsschuhs 10 her eingebracht, zwischen den unteren Bereichen der Seitenwände 11 und 12 zentriert aufgenommen wird und sich von unten an den horizontalen Verbindungssteg zwischen den Seitenwänden 11 und 12 anlegt. Dabei fixieren die Befestigungsplatte 31 und gegebenenfalls die Abschlußplatte 33 des Dämpfungselements 28 den Mitnehmer 24 so im Führungsschuh 10, daß die hohlzylindrische Ausformung 25 des Mitnehmers 24 exakt im Kabelführunqskanal 5 geführt ist. Da die flache Platte 27 des Mitnehmers 24 in ihren Außenabmessungen kleiner ist als die Befestigungsplatte 31 und gegebenenfalls die Abschlußplatte 33, ist die flache Platte 27 weitgehend von der gummielastischen Mittelschicht des Dämpfungselements umgeben und hat keine metallische Berührung mit dem Führungsschuh. Selbstverständlich ist das gummielastische Dämpfungselement nicht allseits von Wänden bzw. Platten umgeben, weil daraus wegen der Inkompressibilität des Gummis eine starre unelastische Verbindung des Mitnehmers mit dem Führungsschuh entstehen würde. Freie Wandflächen des Dämpfungselements sind an seinen beiden Stirnseiten, im Bereich der fensterartigen Ausnehmung 29 und auch an seiner Unterseite gegeben, wenn keine Abschlußplatte 33 vorhanden ist. Die Abschlußplatte 33 kann ggf. auch von geringerer Breite als die Befestigungsplatte 31 sein, so daß auch nach unten das gummielastische Material des Dämpfungselements von der Abschlußplatte nicht völlig abgedeckt ist.

Die Befestigungsbolzen 32 sind beispielsweise auf die Befestigungsplatte 31 stumpf aufgeschweißt und sind durch entsprechende Bohrungen in dem Führungsschuh 10 hindurchgeführt. Im gezeichneten Beispiel sind die Befestigungsbolzen vernietet, sie können aber auch als Schraubbolzen ausgeführt sein.

Die erfindungsgemäße Betätigungsanordnung kann ohne Beeinträchtigung ihrer stoß- und schwingungsabsorbierenden Wirkung auch so ausgebildet sein, daß der metallische Mitnehmer unmittelbar mit dem metallischen Führungsschuh unter Vermittlung eines zwischenliegenden gummielastischen Dämpfungselements beispielsweise durch Vulkanisierung fest verbunden ist.

Es wird eine Betätigungsanordnung für Kraftfahrzeugschiebedächer mit durch Antriebskabel verstellbarem Deckel vorgeschlagen, bei welcher Stoß- und Schwingungsübertragungen von den Antriebselementen auf den Deckel und umgekehrt durch Zwischenlage elastischer Dämpfungselemente zwischen den an die Antriebskabel fest angreifenden Mitnehmern und den die Deckelbewegungen steuernden Führungsschuhen des Deckels gedämpft bzw. vermieden werden.

## Patentansprüche

1. Betätigungsanordnung für den Deckel eines Kraftfahrzeugschiebedachs zum wahlweisen Schließen oder Freigeben einer Dachöffnung, mit mindestens einer mit dem Deckel in Antriebsverbindung stehenden und an einer seitlich an der Dachöffnung zu befestigenden Führungsschiene (2) verschiebbar geführten Verschiebevorrichtung, die mit dem einen Ende eines eine Seele und eine darauf fest aufgebrachte gewindeartige bzw. schraubenlinienförmige Drahtwicklung (22) aufweisenden Antriebskabels (19), das zug- und drucksteif in einem geschlitzten Kabelführungskanal (5) der Führungsschiene (2) verschiebbar geführt ist, über einen Mitnehmer (24) fest verbunden ist, der sowohl in axialer Richtung als auch verdrehsicher am Antriebskabel (19) befestigt ist, **dadurch gekennzeichnet, daß** der Mitnehmer (24) mit der Verschiebevorrichtung über ein elastisches Dämpfungselement (28) verbunden ist.

2. Betätigungsanordnung nach Anspruch 1, **dadurch gekennzeichnet, daß** das Dämpfungselement (28) aus einem gummielastischen Werkstoff geformt ist, in welchem der Mitnehmer (24) teilweise und unlösbar eingebettet ist.

3. Betätigungsanordnung nach Anspruch 1 oder 2, **dadurch gekennzeichnet, daß** der Mitnehmer (24) in seinem an die die Seele des Antriebskabels (19) aufnehmende Öffnung (23) anschließenden Bereich als flache Platte (27) ausgebildet ist,-die in das blockförmig ausgebildete und aus Gummimaterial geformte Dämpfungselement (28) hineinreicht und darin durch Vulkanisieren befestigt ist.

4. Betätigungsanordnung nach Anspruch 3, **dadurch gekennzeichnet, daß** die flache Platte (27) mit durchgehenden Ausnehmungen (30) versehen ist, welche von dem Gummimaterial des Dämpfungselements (28) durchsetzt sind.

5. Betätigungsanordnung nach einem der Ansprüche 1 bis 4, **dadurch gekennzeichnet, daß** dem blockförmig aus Gummimaterial geformten Dämpfungselement (28) eine Befestigungsplatte (31) aus Metall aufvulkanisiert ist, die an ihrer Außenseite Bolzen (32) od.dgl. zur Befestigung an der Verschiebevorrichtung trägt.

## Claims

1. Control configuration for the cover of a vehicle sunroof for closing or revealing a roof opening according to choice, with at least one sliding mechanism in drive connection with the cover and guided along a guide rail (2), which is to be attached to the side of the roof opening, the mechanism being firmly connected via a driver (24) to one end of a drive cable (19) with a core and a thread-type or helical wire winding (22) firmly applied thereto, the cable being guided in a slotted cable guide duct (5) of the guide rail (2) in a tension- and compression-proof manner, and the driver being attached to the drive cable (19) both in the axial direction and in a rotationally rigid manner, **characterised in that** the driver (24) is connected to the sliding mechanism via an elastic damping element (28).

2. Control configuration according to Claim 1, **characterised in that** the damping element (28) is shaped from a rubber elastic material in which the driver (24) is partially and permanently embedded.

3. Control configuration according to Claim 1 or 2, **characterised in that** the area of the driver (24) which adjoins the opening (23) which holds the core of the drive cable (19) is formed as a flat plate (27), which extends into the block-shaped damping element (28), shaped from rubber material, and is attached therein by vulcanisation.

4. Control configuration according to Claim 3, **characterised in that** the flat plate (27) is provided with through-openings (30) which are penetrated by the rubber material of the damping element (28).

5. Control configuration according to one of Claims 1 to 4, **characterised in that** a metal attachment plate (31) is vulcanised onto the damping element (28) shaped as a block from rubber material, the plate having bolts (32) or similar on its external side for attaching it to the sliding mechanism.

## Revendications

1. Dispositif d'actionnement pour le recouvrement d'un toit ouvrant d'automobile, destiné à fermer ou à dégager sélectivement une ouverture de toit et comprenant au moins un mécanisme de manoeuvre qui est relié suivant une relation d'entraînement au recouvrement, qui est mobile, sur un rail de guidage (2) à fixer sur le côté de l'ouverture de toit, et qui est relié solidement par l'intermédiaire d'un organe d'entraînement (24) à une extrémité d'un câble d'entraînement (19) qui comporte une âme et, fixé sur celle-ci, un fil enroulé en forme de filetage ou d'hélice (22), et qui est mobile, rigide à la traction et à la compression, dans un conduit de guidage de câble fendu (5) du rail de guidage (2), ledit organe d'entraînement (24) étant fixé au câble d'entraînement (19) dans le sens axial et de manière à ne pas être tordu, **caractérisé en ce que** l'organe d'entraînement (24) est relié au mécanisme de manoeuvre par l'intermédiaire d'un élément d'amortissement élastique (28).

2. Dispositif d'actionnement selon la revendication 1, **caractérisé en ce que** l'élément d'amortissement (28) est formé à partir d'une matière en caoutchouc dans laquelle l'organe d'entraînement (24) est encastré partiellement et de manière non amovible.

3. Dispositif d'actionnement selon la revendication 1 ou 2, **caractérisé en ce que** l'organe d'entraînement (24) est conçu, dans sa zone qui fait suite à l'ouverture (23) recevant l'âme du câble d'entraînement (19), comme une plaque plate (27) qui entre dans l'élément d'amortissement (28) en forme de bloc et composé de matière en caoutchouc, et qui est fixée dans celui-ci par vulcanisation.

4. Dispositif d'actionnement selon la revendication 3, **caractérisé en ce que** la plaque plate (27) est pourvue de creux traversants (30) qui sont traversés par la matière en caoutchouc de l'élément d'amortissement (28).

5. Dispositif d'actionnement selon l'une des revendications 1 à 4, **caractérisé en ce qu'**on applique par vulcanisation sur l'élément d'amortissement (28) en forme de bloc en matière en caoutchouc une plaque de fixation (31) en métal qui porte sur son côté extérieur des tiges (32) ou des éléments similaires pour sa fixation au mécanisme de manoeuvre.
